(19) Europäisches Patentamt / European Patent Office / Office européen des brevets

(11) **EP 1 951 003 B2**

(12) **NEW EUROPEAN PATENT SPECIFICATION**
After opposition procedure

(45) Date of publication and mention
of the opposition decision:
**16.11.2022 Bulletin 2022/46**

(45) Mention of the grant of the patent:
**09.12.2009 Bulletin 2009/50**

(21) Application number: **07101003.7**

(22) Date of filing: **23.01.2007**

(51) International Patent Classification (IPC):
**H05B 6/12** *(2006.01)*

(52) Cooperative Patent Classification (CPC):
**H05B 6/065**

(54) **Control method for induction cooking hob and induction cooking hob adapted to carry out such method**

Verfahren zur Regelung eines Induktionskochfeldes und zur Ausführung dieses Verfahrens adaptiertes Induktionskochfeld

Procédé de commande d'induction d'une plaque de cuisson et d'induction d'une plaque de cuisson adaptée à un tel procédé

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**30.07.2008 Bulletin 2008/31**

(73) Proprietors:
• **WHIRLPOOL CORPORATION**
**Benton Harbor**
**Michigan 49022 (US)**
• **TEKA Industrial S.A.**
**39011 Santander (ES)**

(72) Inventors:
• **Pastore, Cristiano**
**21025 Comerio (IT)**
• **Bonfrate, Gabriele**
**21025 Comerio (IT)**

(74) Representative: **Hoffmann Eitle**
**Patent- und Rechtsanwälte PartmbB**
**Arabellastraße 30**
**81925 München (DE)**

(56) References cited:
**EP-A- 0 844 807** **EP-A1- 0 926 926**
**EP-A1- 1 361 780** **EP-A2- 0 286 044**
**EP-A2- 0 286 044** **EP-A2- 0 817 531**
**WO-A-2006/117182** **WO-A1-2006/117182**
**WO-A2-2005/043737** **DE-T2- 60 303 350**
**JP-A- H08 213 163** **JP-A- 2000 036 375**
**JP-A- 2006 245 013** **US-A- 4 736 082**
**US-A- 4 749 836** **US-A- 4 871 961**
**US-A1- 2008 087 661**

• **Barragan L.A., Burdio J.M., Garcia J.R., Martinez A., Monterde F.: "A Two-Output Series-Resonant Inverter for Induction-Heating Cooking Appliances", IEEE Transactions on Power Electronics, Institute of Electrical and Electronics Engineers, USA, vol. 20, no. 4, 1 July 2005 (2005-07-01), pages 815-822, USA ISSN: 0885-8993, DOI: 10.1109/TPEL.2005.854024**

EP 1 951 003 B2

**Description**

The present invention concerns a method for controlling the power delivery to a pair of induction heaters/coils belonging to a household cooking hob. Induction cooking appliances rely on the inductive effect to heat cooking vessels placed on their cooking surfaces. Vessel heating occurs by the inductive coupling of the metallic pan with the time-varying magnetic field generated by the appliance.

The basic functional architecture implemented into an appliance for generating the electromagnetic field comprises at least one inductor for each cooking zone of the induction heaters (including a metallic coil commonly referred as "pancake"), an electrical power generator to supply the coils, an electronic control unit to supervise the power delivered by the coils, and and to execute the user settings inputted through the user interface.

The so-called "eddy currents" are induced in the bottom side of the metallic pan from the electromagnetic field generated by the inductor coil. The electronic control unit supervises the power delivered to the coil by means of a high frequency driving signal. The driving signal controls the operations of an electronic AC-AC converter (hereafter referred to as "converter") provided with solid-state switches (Insulated Gate Bipolar Transistor-IGBT, or the like) that supplies the coils with a suitable AC current. Consequently, the coil generates, in the surrounding space, a time-varying electromagnetic field whose amplitude and frequency determine the amount of power delivered to the pan. The induced currents find in the vessel bottom an electrical resistance R which depends mainly from the material characteristics and from the electromagnetic field penetration depth (namely, skin effect). The induced currents generate heat according to the Joule effect.

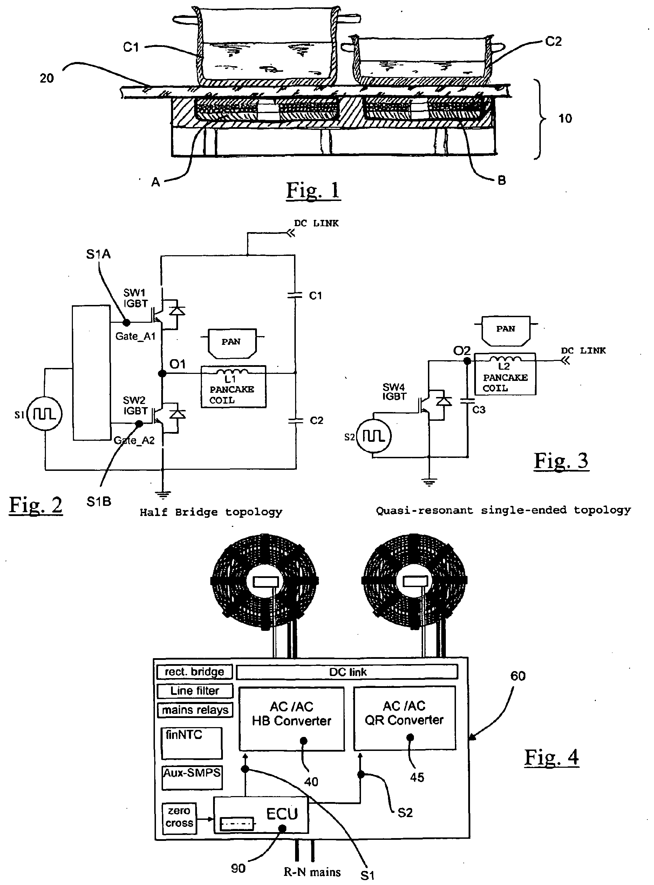

Several circuits are known to generate such time-varying electromagnetic field but, as consequence of the typical operating frequencies and considering the power normally delivered by a single heater (ranging from 0 to 3 kW), two main resonant converter circuits are commonly adopted: the resonant Half-Bridge (HB) converter (Fig.2), and the Quasi-Resonant (QR) converter (Fig.3). The driving signals of these converters typically ranges from 20 kHz to 50 kHz.

These converters, thanks to solid state switches like IGBT, convert the static rectified DC-link voltage into a squared voltage waveform that supplies a resonant RLC circuit, wherein L is the impedance of the coil, C is the resonant capacitor and

R is the circuit resistance, linked with the pan characteristics.

In the case of the HB topology, the resonant "tank" circuit (the L and C of the resonant circuit) is defined by the inductor coil L1 and the two resonant capacitors C1 and C2. A driving signal S1 shaped as square waveform with frequency $f_{HB}$ switches, directly or through a switching logic SL, two IGBT's (SW1 and SW2), alternating, within the control period T, the voltage applied to the resonating circuit. The signal $O_1$ of the HB converter during the control period T, is a forcing oscillator. The alternate current flowing through the coil L1 induces the time-varying electromagnetic field in the surrounding area, necessary for heating the above placed pan.

In the case of the QR topology, L2 and C3 define the resonant "tank" circuit. The single IGBT (SW4) of the circuit is driven with a squared wave signal (S2) generated by the electronic control, energizing the circuit output ($O_2$) during the $T_{ON}$ portion of the driving period T only, and leaving the circuit output ($O_2$) free to oscillate during $T_{OFF}$. In fact, during $T_{ON}$ the IGBT conducts and the coil L2 is charged from the static DC-link voltage while, in the following time of the period T when IGBT is open, the circuit is freely oscillating as a damped harmonic oscillator. $T_{OFF}$ is therefore defined as the time elapsed between the end of $T_{ON}$ and the time instant when the oscillating current flowing trough the capacitor C3, or the voltage across its terminals, crosses the zero value for the first time. $T_{OFF}$ is therefore linked by the physics of the oscillator with the selected $T_{ON}$, the free oscillation being determined by the system L2, C3, R (when the pan is superposed to the coil) in which the initial oscillating conditions are defined by the charge of the coil L2 (load) accumulated during $T_{ON}$. The power supplied by the pancake coil L2 is therefore set by choosing the proper $T_{ON}$ time.

In other equivalent embodiments $T_{OFF}$ can be intended as the time elapsed between $T_{ON}$ and the time instant for which the voltage across the coil L2 crosses the zero value for the first time.

It is here pointed out that the output signals of the AC converters are not normally regular sinusoids. For this reason, in the following description when an AC frequency is mentioned, is intended to refer to the signal fundamental frequency, in the meaning of signal spectral analysis.

The fundamental operating frequency of the AC signal outputted by the converter is therefore given by $f_{QR} = 1/(T_{ON} + T_{OFF})$.

For a HB converter, the power transfer characteristic of the coupled systems, that is the relationship between the power P delivered from the heater to a superposed cooking utensils, pots, pans, casseroles or the like and the frequency $f_{HB}$ of the driving signal generated by the electronic control unit, resembles the shape typical of lightly damped forced harmonic oscillator.

For a QR converter, the output power P is in a direct relationship with the switching frequency $f_{QR}$, once $T_{ON}$ is established, and the related power transfer characteristic of the coupled systems represents this link. Also in this case, the power transfer characteristic of the coupled systems resembles the typical shape of lightly damped forced harmonic oscillator.

For both the converter topologies the damping oscillator factor is provided with the resistance R, specific of each pan, "mirrored" into the pancake through the inductive coupling.

For avoiding the IGBT damages and to increase the converter efficiency (that means reducing the power dissipated during the switching operations), in both the converter topologies the IGBT's must be switched in the narrow time window when the voltage across the IGBTs is crossing the zero. Sometime the IGBTs are also protected against over currents by applying snubbing networks in parallel.

The main advantage of the QR topology compared with the HB topology is in its lower cost, due to the reduced number of components. Disadvantages are in the tight time switching to which the IGBT is subjected.

A problem affecting both the topologies when operating in pairs in order to activate simultaneously two induction heaters, in a not coordinated and optimized way, is the occurrence of a too frequent light flickering and, more generally, a non compliance with the regulations concerning the requirements for the electromagnetic induced emissions.

Another problem affecting both converter topologies is the onset of beat noise that may occur when two or more converters are connected to the same power line filter when driving signal operate at different frequencies. In particular, when two induction heaters/coils are activated for heating at the same time two vessels placed on the hob, their converters need to be driven at proper frequencies in order to deliver to the vessels the requested power. Whenever these frequencies differ from less than the maximum audible frequency (around 16kHz), the shared line filter may produce mechanical vibration. An audible whistling noise may therefore annoy the user.

Some of the problems above mentioned have been addressed and solved by implementing specific solutions. Two of these solutions are hereafter summarized.

In WO 05/043737A2 it is described an asymmetrical duty cycle control method for driving two HB converters connected to respective induction coils, operating at the same time, for delivering to each of the two superposed vessels a preset amount of power.

The control method disclosed consists in keeping constant the frequency of the squared waveform driving signal (S1 in Fig. 2) for each of the two HB converters and adjusting in a proper way, the duty cycle of the two IGBT gate signals (S1$_A$ for Gate_A1, S1$_B$ for Gate _A2 in fig.2), allowing each coil (induction heater) to deliver the preset amount of power to its superposed vessel. It is known when a duty cycle is changed from its value of 50%, to a lower or higher value, the r.m.s. voltage applied to the coil is reduced, leading to an output power lower than that obtainable at 50% value of duty cycle (which is the Pmax value deliverable to the superposed vessel by this system).

The regulation ratio, which is the ratio Pmax/Pmin, wherein Pmin is the minimum power deliverable to the vessel by the system using the duty cycle modulation, is lower than 3:1.

When the difference between the power to be delivered by the two coils is too large to be accommodated by the duty cycle modulation only, the driving frequencies of the two coil/burners are displaced of, at least, 17kHz apart.

The use of an additional control parameter (duty-cycle) in the HB converter topology makes possible to extend the range of allowed output power levels and prevents the onset of beat noise when multiple heaters are operated at the same time. On the other side, the asymmetrical gate driving leads the converter towards a lower efficiency resulting in heat dissipated during the switching operation, because the snubbing network required to prevent this phenomena can be tailored only for a given switching duty cycle. Moreover, the electrical and thermal stresses on the two IGBTs are unevenly distributed. Finally, the PWM (Pulse Width Modulation) generation with unsymmetrical duty cycle is not a cost-effective solution.

From EP 0286044 it is disclosed an AC-AC single converter circuit, either HB or QR type, shared to feed two induction heaters/coils, alternatively connected by means of a relay switch. With this circuit configuration, low power levels can be delivered acting an ON-OFF modulation when switching between the two coil elements, keeping active at the fixed power each element for the time required to deliver the net average power required. The beat noise is inherently avoided by alternatively driving only one of the coils. Such approach presents several drawbacks.

The appliance may cause annoying light flicker due to the frequent changes in drained current from the mains.

The power according to this method is not delivered in a smooth way modality. In fact, when the ON-OFF modulation is too slow, the commutation could be perceived from the user especially at low power levels, because these levels are implemented by outputting a relatively large amount of power for a short time, which could potentially damage the cooked food. When otherwise both the heaters are operated at high power level, the user may perceive the switching between the elements, seeing the water boiling and then stopping.

Another way to achieve the independent power regulation when using two HB converters working at the same frequency, is to include upstream each converter a DC-Bus voltage regulator like a well known step-up (boost), step-down (buck), Buck-Boost or similar. This approach is commonly used in industrial applications but is nearly absent in consumer applications because of the increase of cost, power dissipation, and the space occupied by the additional power conversion stage.

An object of the present invention is therefore to provide a method that does not present the drawbacks of the prior art. More specifically, the method according to the present invention enables the simultaneous operation of two induction heaters avoiding the occurrence of beat noise while providing a smooth delivery of the preset power levels. The method is then not limited by the intrinsic characteristics of the converter and coil assembly, being applicable to the HB and QR converter topologies and to similar topologies or those derived therefrom. In a further step the method can be refined by selecting among the possible working modalities, the one that optimizes one or more additional working parameters as the minimization of the light flickering effect, the minimization of the component stress, or the overall efficiency.

The method can be applied using slow and fast time scales and prevents the onset of flicker noise.

Other features and advantages of the present invention will become readily apparent from the following detailed description and example when read in light of the accompanying drawings, in which:

- figure 1 shows a schematic sectional view of an induction cooking hob;
- figure 2 shows the schematic of a Half Bridge converter topology circuit, known in the art;
- figure 3 shows the schematic of a Quasi Resonant converter topology circuit, known in the art;
- figure 4 is a representation of the functional architecture for an induction cooking hob according to the present invention;
- figure 5 shows the power characteristic curves of two heaters according to the invention;
- figure 6 shows a graphical diagram of the power delivered by two induction heaters during a control period , when the heaters are driven according to the method of the present invention;
- figure 6A shows one of the possible embodiments of the method according to the present invention, in which the activation sequence of the two induction heaters, is shown during two consecutive control periods;
- figure 7 shows another embodiment of the method wherein the control period comprises a third time fraction;
- figure 8 is a diagram of a finite number of calculated solutions plotted vs. duty cycle %;
- figure 9 is another diagram of the same data shown in fig. 8 highlighting the solution chosen to optimize the light flickering parameter;
- figure 10 shows the diagram of fig.8 wherein the chosen solutions are highlighted;

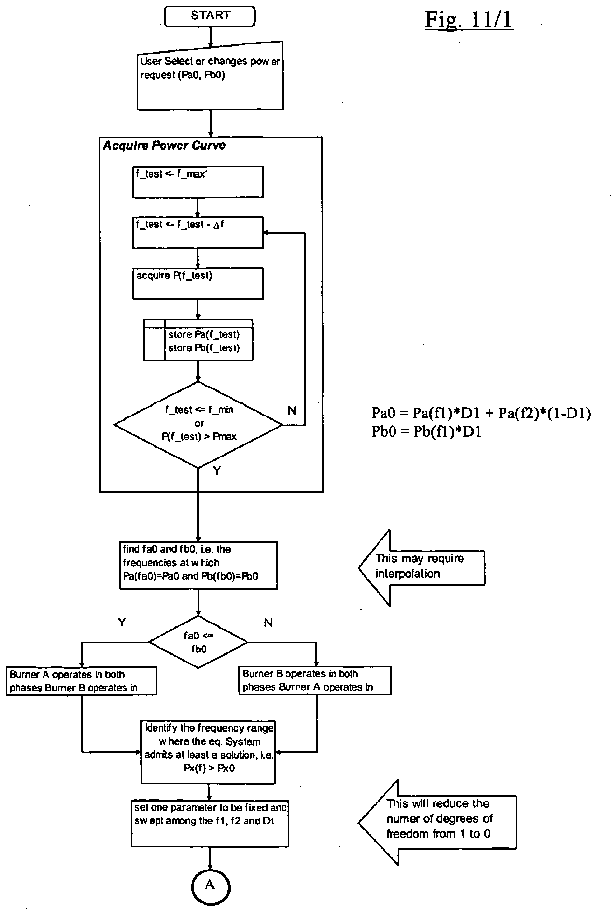

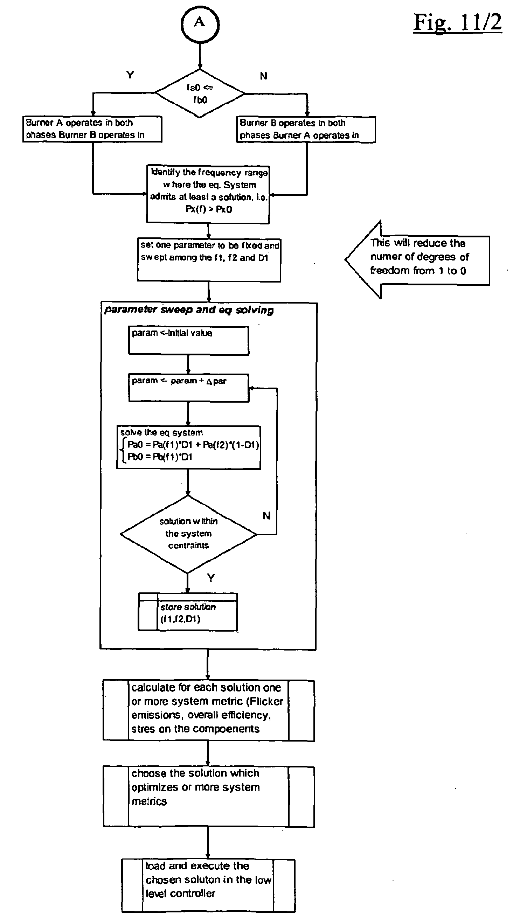

- figure 11 is a schematic flow chart of a possible implementation of the method according to the present invention, and
- figure 12 is the representation of a further embodiment of the method according to the present invention.

With reference to the drawings, an induction hob 10 is provided with a glass ceramic surface 20 or the like, an user interface (not shown) two induction heaters/coils A, B, (also known as burners) and a common control circuit 90 provided with two converters 40, 45 (this architecture is also named as twin converters configuration) for driving the two heaters/coils A, B in a coordinated way. Each converter 40, 45 can be of the known type, based either on the HB (shown in Fig.2) or on the QR topology, (shown in Fig.3) or derived from these types.

In a different hob configuration (not illustrated) more pairs of induction heaters are included in the same hob and the control circuit is designed to drive, in a coordinated way, each pair of coils A, B. In another (not illustrated) hob configuration, two induction coils A, B driven according to the present method define an induction heater provided two heating zones.

Two cooking utensils C1, C2 as like pots, pans, casseroles or the like, are placed on the hob surface 20 in correspondence to the underneath induction heaters/coils A, B. The levels of power $PA_0$ $PB_0$ to be delivered, respectively, from heater A and

B to their superposed cooking utensils C1 and C2, are set in the electronic control unit before to start operating, in direct relationship with the inputs received from the user through the user interface. The power levels $PA_0$ $PB_0$ of the two heaters A, B can be set for example at $PA_0$=2.5kW and $PB_0$=800W.

The method of the present invention is a control algorithm allowing two induction heaters/coils A, B to simultaneously deliver the preset power levels $PA_0$ $PB_0$, on average over the control period T, to their respective superposed cooking utensils C1, C2 by driving their single converters in a coordinated way. The method is substantially an "open-loop" control, relying on the assumptions that the power characteristic curves of the two induction heaters A, B are known.

Generalizing the definition given above, the power characteristic curve is the relationship between a characteristic of the signal S1, S2, driving the converter 40, 45, which is an adjustable periodic driving signal S1, S2, and the power PA, PB delivered to the specific superposed cooking utensil C1, C2 in the operating range of the induction heater A, B. The characteristic of the periodic driving signal S1, S2 to be considered in the construction of the characteristic curves depends from the type of converter 40, 45 used and could be, for instance, $f_{HB}$ in the case of the HB converters 40 or $f_{QR}$, with a certain $T_{ON}$-$T_{OFF}$, for the QR converters 45 types. In an equivalent way, other characteristics of the driving signals S1, S2 can be used for the construction of the power characteristic curve.

A convenient selection of the control period T is then made with the aim to obtain a smooth heat delivery. In a preferred embodiment the control period T is lower than the thermal time constant Tau of the superposed cooking utensils (C1, C2), which is normally not lower than 12 seconds, to provide a smooth power delivery to the superposed cooking utensils (C1,C2). According to this, a convenient control period can be set, for instance as T= 5 sec.

T value can also be chosen to be a multiple of the half period of the power supply network.

In the example described in Fig.1 to 4, two equals induction heaters are connected with two converters. The first heater A is connected to a HB converter 40, while the second heater B is connected to a QR converter 45. In others embodiments (not described) both the induction heaters/coils can be connected to converters belonging to the same topology, either HB, QR or similar and derived. In different embodiments the power dimension for the two heaters A, B may also be not necessary equal.

In order to apply the method of the present invention, it is required to build, for each of the two heaters/coils A, B coupled with their superposed cooking utensil C1, C2, its specific power characteristic curve. This operation has to be performed when a cooking utensil is placed the first time on the hob surface, above the induction heater, prior to its activation.

In an example of implementation of the method according to the present invention, for the first heater A the power characteristic curve $PA=F_{C1}(f_{HB})$ is created by first mapping the power delivered by the induction heater to the superposed cooking utensil C1, over a certain number of frequencies distributed in the frequency range for which the induction system has been designed to operate.

This power mapping is achieved by stepping on the frequency $f_{HB}$ of the signal S1 driving the HB converter in the operating range $f_{HB1}$, $f_{HB2}...f_{HBN}$ and determining the associated power outputs $PA_{fHB1}$, $PA_{fHB2,.}$ $PA_{fHBN}$ for each step 1, 2.. N with any of the known methods (i.e. shunt resistors, etc.).

For the burner B, in a similar manner, the power transfer characteristic related to the superposed cooking utensil C2 is $PB=F_{C2}(f_{QR},T_{ON})$, or in an equivalent way $PB=F_{C2}(T_{ON},T_{OFF})$, and is built stepping $T_{ON}$ of the driving signal S2 over the heater operating range, reading $T_{OFF}$ with the time counter of the electronic control unit, and determining the corresponding power outputs $PB_{fQR1}$, $PB_{fQR2}$, ..$PB_{fQRN}$ is calculated by the control unit 90.

After the mapping operation, the whole power characteristic curves $PA=F_{C1(fHB)}$ and $PB=F_{C2}(f_{QR},T_{ON})$ or $PB=F_{C2}(T_{ON},T_{OFF})$, related to the specific superposed cooking utensils C1,C2, can be reconstructed, when required, interpolating the single sampled points using one of the known numerical methods, for instance the $5^{nd}$ order polynomial method. The characteristic curves are then memorized into the memory of the control unit 90 in the form of lookup tables, or either in equation form.

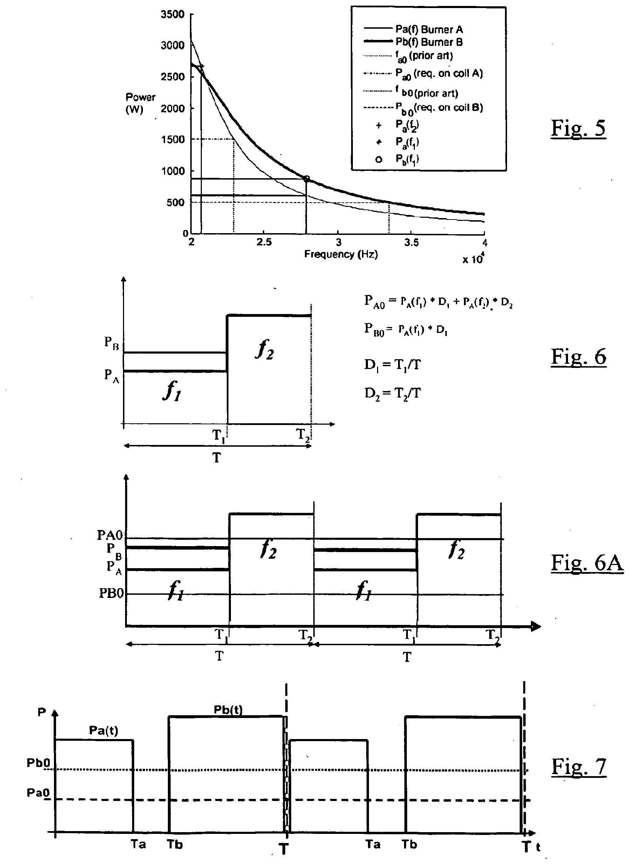

The characteristic curves $PA=F_{C1}(f_{HB})$ of the first heater A and $PB=F_{C2}(f_{QR})$, or $PB=F_{C2}(T_{ON},T_{OFF})$ for the second heater B, are plotted in Fig. 5.

It is here pointed out that, to cope with slow variations of the power transfer curve due to changes of the load impedance (due to pot heating, pot movement etc.), the system may need to check continuously the consistency of it's stored power transfer curve with the actually delivered power in order to trigger a new acquisition of such curve upon the evidence that a substantial calculated deviation DE has occurred since the last acquisition. In one example of implementation, the amount of deviation DE that may be tolerated before a new acquisition is deemed to be required is directly related to the desired accuracy of the power control and may be preferably set in the range of 2% to 10% or relative error. A threshold error $T_{HE}$ for comparing the calculated deviation DE can therefore be set, i.e. $T_{HE}= 5\%$ of relative error. When the deviation DE is greater that the threshold error $T_{HE}$, the power characteristic curve $P=F_{C1}(f_{HB})$, $P=F_{C2}(f_{QR})$, or $P=F_{C2}(T_{ON},T_{OFF})$ is newly built.

It is also pointed out that in some embodiments of the present method, standards power characteristic curves related to standard cooking utensils to be used on the hob can be stored into the control unit memory of the electronic control 40 during the manufacturing phase and therefore, when the related cooking utensil is recognized, one or more among the memorized curves are used.

In the case when only one single cooking utensil C1 or C2 need to be heated, the controls 40 activates its induction heater, A or B by applying to the converter 40 45 to which the heater is connected a proper driving signal S1, S2, in order to allow the induction heater to deliver to the superposed cooking utensil C1 C2, the preset power level $PA_0$ or $PB_0$. The characteristics of this proper signal S1, S2 are calculated form the power characteristic curve of the single induction heater, previously generated, directly or by interpolating the mapped points.

In the example described in fig. 4, 5, 6, 6A, 8, 9, 10, heating the first cooking vessel C1 superposed to the first heater A without operating the burner B (heater B switched OFF), requires to drive the HB converter with a driving signal S1 operating at a frequency of $f_{HBPA0}=24$ kHz while, in the same way, heating the second cooking vessel C2 superposed to the second heater B without operating the burner A, requires to drive the QR converter with a driving signal S2 operating at the frequency $f_{QRB0}=$ 26 kHz wherein $T_{ON}= 15$ μsec.

When both the cooking utensils C1 C2 need to be heated at the same time, the method according to the present invention is applied. According to this method two induction heaters A, B deliver the preset power $PA_0$, $PB_0$, on average over the period T to their respective cooking utensils C1 C2, by driving the two converters with their respective periodic signals S1, S2 including a two-fractions sequence, illustrated in Fig.6, 6A, for which:

- during a first fraction T1 of the period T, both the induction heaters A and B are simultaneously activated driving their converters 41, 44 with a signal S1, S2 operating at the same first frequency f1, that means $f_{QR}$=f1 and $f_{HB}$=f1;
- during a second fraction T2 of the period T, one of the two induction heaters A, B is turned off halting its driving signal S1, S2, while the other heater continues to operate driven its converter with a signal S1, S2 operating at a second frequency f2.

Of course also the inverted sequence in which T2 precedes T1 is included in the present invention, since it is not important the order of the time fractions T1, T2 within the control period T, rather than their occurrence.

The induction heater which is to be switched off among the two A, B during the second fraction T2 is the one that, if operating alone (with the other heater switched off) at the requested power level, would require a driving signal presenting the highest frequency. According to the typical shape of the power characteristic curves, the heater to be switched off is normally the one that has to supply the lower power level among two equal induction heaters.

In the described example, being the first heater A driven with a signal S1 operating at $f_{HBPA0}$=24 kHz in order to supply a power of 1,5 kW to its superposed cooking utensil C1, and being the second heater B driven with a signal S2 operating at

$F_{QRB0}$= 26 kHz with $T_{ON}$= 15$\mu$sec in order to supply a power of 1 kW to its superposed cooking utensil C2, the heater that will be switched off during the second fraction of the control period T2 is the second heater B.

In Fig.5 the frequencies $f_{HBPA0}$=23 kHz and $F_{QRB0}$= 34 kHz, satisfying the predetermined powers levels $PA_0$ and $PB_0$, are represented on the respective power characteristic curves $P_{C1}=F_{C1}(f_{HB})$, and $P=F_{C2}(f_{QR})$, or $P=F_{C2}(T_{ON}, T_{OFF})$ related to the induction heaters A, B coupled with their superposed cooking utensils C1, C2.

In the preferred embodiment of the method according to the present invention T=T1+T2, wherein T1 can precede T2 or vice versa. In a different, not described method application, T1 and T2 are continuously alternated in the consecutive driving periods T during the heaters time activation, being T1 preceding T2 in the first control period T, while, in the following control period T, T2 is preceding T1, and so on.

There could be also a case, in another method embodiment shown on Fig.7 in which there exists also a third fraction T3 of the period T, located within the same period T, in which both the induction heaters are switched off. This is the case when it is requested to regulate the burners at very low power levels for which the frequency of the driving signals S1, S2 should be too high for switching the solid state switches. In such case a low (average) power is supplied to the cooking utensils, by reducing the activation time of the heaters over the period T, introducing a dead time, which is the third fraction T3. In this case T =T1 +T2 +T3.

In the preferred embodiment, once defined D =T1/T, the calculation of the first frequency f1, of the signals S1, S2 driving both the converters of the induction heaters A, B during the first fraction T1, and the calculation of the second frequency f2, of the signal S1, S2 driving the single converter of one induction heater during the second fraction T2 of the period T, come out from the solution of the following set of equations:

$$PA_0 = PA(f1) \, {}^*D + PA(f2) \, {}^*(1\text{-}D)$$

$$PB_0 = PA(f1) \, {}^*D$$

One preferred way to solve the above set of equations is "to sweep" the parameter D over a number n of discrete steps in the range of [0..1]. For each of these steps | a solution of the above system of equations is then searched. Each solution, when existing, is defined by a set of three values of the parameters {D= $D_n$, f1= $f_{1n}$, f2= | $f_{2n}$}, each solution fulfilling the power requests of $PA_0$ and $PB_0$ over the control period T. A subset of these solutions, evenly distributed in the admitted operating range, can be calculated with known algebraical methods. This calculation is easily performable with a processor normally used for commercial appliances, requiring few instants of CPU time.

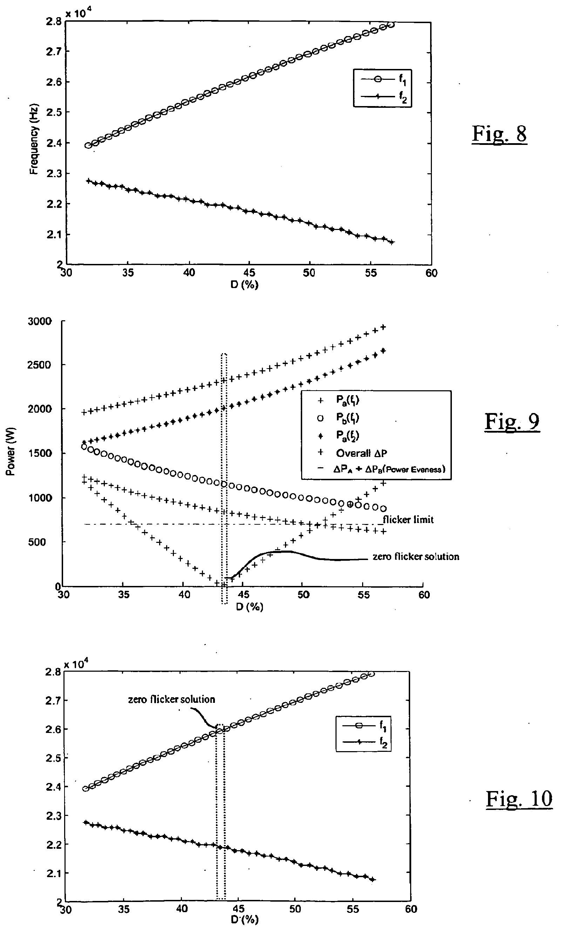

In the example, a calculation of a number of allowed solutions has been performed. The calculated solutions are plotted in Fig 8, wherein the horizontal axis shows D.

The calculated solutions can be stored into the memory of the electronic control unit 90 for further processing. In fact, the choice of one solution among the whole set of available solutions may be done applying one or more optimization criteria.

It is here highlighted that choice of driving the two induction heaters/coils A, B together in the first fraction T1 with driving signals S1, S2 operating at the same first frequency f1, avoids any occurrence of acoustic noise perceived from the users during the heating operations. For the second fraction T2 the problem is not present, having only one heater operating.

In a further step of the method, additional criteria can be applied with the aim to select, among the admitted solutions, the one that optimizes one or more working parameters of the circuit. These parameters depend from the type of installation chosen for the appliance and related for instance, with the minimization of power losses across the solid state switches during the switching operation, or with the reduction of the component's stress, or with the minimization of the light flickering when switching between the fractions T1, T2 (and eventually with the third fraction T3 of the period T).

As consequence, when any of the mentioned optimization criterion is established, it is defined another functional relationship (in the form of equation or lookup table) between the characteristics of the driving signal S1, S2 and a functional parameter linked with the optimization criteria.

The combination of the new constraints defined by the functional relationships with the set of equations previously described provides a subset of solutions that optimize the functional parameter, and consequently the criteria. More than one criterion can be applied in determining the optimized solutions $f1_{OPT}$ and $f2_{OPT}$.

In fig. 9 curves are plotted representing some examples among the optimizing criterion.

The final choice of the first frequency f1 = f1$_{OPT}$ and of the second frequency f2= f2$_{OPT}$ can be finally done.

In the example, as highlighted in Fig. 9 and 10, the optimized solution f1$_{OPT}$, f2$_{OPT}$, D chosen is the one that satisfies, in the most favorable way, the criterion of the minimum light flickering. Finally, it results that f1=f1$_{OPT}$= 25,8kHz, f2= f2$_{OPT}$= 21,8kHz, D=43%

It is then pointed out that normally the value of the calculated first frequency f1, f1OPT, is different from the value calculated for the second frequency f2, f2OPT but, in some specific cases, they could be identical.

Once a suitable solution among the available set has been identified, expressed in terms of the three outputs: f1, f2, D (being D1= T1/T), wherein D is a real number ranging from 0 to 1 [0,1], a further refinement of the present invention can be applied.

In practice, any digital implementations of both ON/OFF and PWM control algorithm, applies some form of quantization of the time Δt, which is the time quantization of T or time slice, to the solution D, thus becoming a rational number <D1>. For instance, assuming the solution for D=0.37, and having chosen T= 5 seconds and choosing Δt = 0.25 seconds, the closest available Duty Cycle <D1> would be equal to 0.35 (0.35= round (0.37/(0.25/5)).

If choosing the time slice Δt synchronized with the power supply network and equal to the half of the duration of the power supply network period, i.e. 10 msec., it is possible to apply driving signals S1, S2 providing with control patterns as the one described in the so called "cycle skipping" method. Such method is well known in the art and described in US 4871961. This document discloses a method of controlling the supply of power to electrical loads with a minimum of switching surges, while providing finer power control.

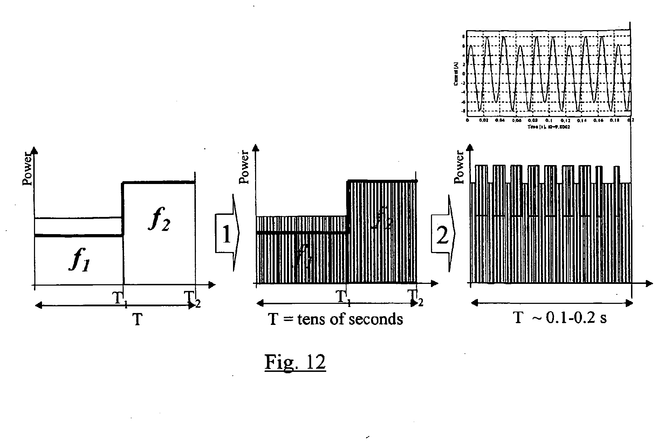

According to this, the method according to the present invention has to include the following additional steps, before to be executed (shown in fig. 12):

- find the best approximation of the required Duty Cycle <D1> with the given choice of Δt/T calculating: <D1>=round (D/(Δt/T), wherein <D1> is the quantized value of D.
- Slice the control period T according to the 10ms quantization.
- Permute the slice order

In a preferred embodiment, the permutation of the slice order is performed with a first step consisting in sorting the slices of the control period T according to their overall power values (applying sorting criteria according either to an increasing or a decreasing value), wherein the overall power value for each slice is the sum of the powers delivered by the two heaters in the same slice . This sorting can be done with the software, mapping the slices of the control period T together with their overall power values into an associated logic slices-array, and then sorting the slices-array according to the selected criteria. In a second further step of the permutation, the new slices sequence is generated by picking one slice from the top of the sorted slices-array and adding the slice to a new ordered-array containing the new ordinate sequence of slices, and then picking two slices from the bottom of the slices-array, and adding the two slices to the ordinate array. This procedure (sequence *top-top-bottom*) has to be repeated until all the sorted slices have been reordered.

This permutation method, is particularly effective in fulfilling the normative requirement of low frequency emissions standards as Flicker (IEC61000-3-3) and the Harmonics (IEC61000-3-2).

An equivalent re-sorting method consists in a sequence of slices created by picking two slices from the bottom of the slices-array, followed by one slice picked from the top of the array *(sequence bottom-bottom-top)*.

The steps of one of the possible implementations are graphically represented in fig. 12. In this representation the defined solutions D, f1 and f2 or, when applying the further optimization criteria D, f1$_{OPT}$ and f2$_{OPT}$, are indicated with the reference sign 1. With the reference sign 2 is represented the following step, wherein the control period T has been sliced in Δt/T control slices having time duration Δt. After this operation, the slices have been permutated within the control period T. One of the possible permutation applicable according to the present invention is been represented in fig.12 and referenced with the sign 3. In this representation the short bars correspond to the time slices referred to the second fraction of the control period before the slicing operation, wherein only one burner is activated with a driving signal S1, S2 having frequency f2. The corresponding cycle skipping pattern is shown in the graphic 4.

Test carried out by the applicant have shown that a 21 time slices (i.e. T/Δt=21) delivers a good compromise between quantization error (i.e. granularity of the regulation) and flicker performance (being code compliant up to 1300W power steps).

This further refinement of the method that introduce the cycle-skipping method, enables the delivery of broad range of average power levels, granting smooth delivery and flicker free operation.

Finally, being the set of equations used in this method not depending upon pattern period T, the method, the further steps and the further additional refinements can be applied on slow, as well as fast, timescales. Cycle-skipping techniques are therefore applicable.

**Claims**

1. Method for activating simultaneously two induction heaters (A,B) of an induction hob (10) or the like, each induction heater (A,B) being connected to a converter (HB, QR) for the independent regulation of preset power levels ($PA_0$, $PB_0$) to be delivered from each heater (A,B) to a superposed cooking utensil (C1,C2), the converters (HB,QR) being driven with adjustable periodic signals (S1, S2, $f_{HB}$, $f_{QR}$, $T_{ON}$, $T_{OFF}$) during a predetermined control period (T), the method comprising the steps of:

- activating simultaneously the induction heaters (A,B) by driving their converters (HB,QR) with adjustable periodic signals (S1, S2, $F_{HB}$, $f_{QR}$, $T_{ON}$, $T_{OFF}$) presenting an identical first frequency (f1 ,$f1_{OPT}$) during a first fraction (T1) of the control period (T),
- activating only one of the induction heaters (A,B) previously activated during the first portion (T1) by driving its converter (HB, HQ) with a signal (S1, S2, $f_{HB}$, $f_{QR}$, $T_{ON}$, $T_{OFF}$) presenting a second frequency (f2, $f2_{OPT}$) for a second fraction (T2) of the control period (T), **the other one of the two induction heaters (A,B) being turned off halting its driving signal (S1, S2).**

2. Method according to claim 1, **characterized in that** it includes also the step of building the power characteristic curves (PA, PB), for each induction heater (A, B) coupled with its related superposed cooking utensil (C1, C2) and **in that** the power characteristic curves (PA, PB) are built and stored into the control unit memory before the activation.

3. Method according to claim 1 and 2, **characterized in that** the control period T is lower than the thermal time constant (Tau) of the superposed cooking utensils (C1,C2), to provide a smooth power delivery to the superposed cooking utensils (C1,C2).

4. Method according to any of the preceding claims, **characterized in that** the first frequency (f1, $f1_{OPT}$) is different from the second frequency (f2, $f2_{OPT}$).

5. Method according to any of the preceding claims, **characterized in that** the induction heater (A, B) to be switched off during second fraction (T2) is the one, among the two induction heaters (A, B), that would be driven at the highest signal frequency ($F_{HBPA0}$, $F_{QRPB0}$) to deliver the requested power level ($PA_0$, $PB_0$), when activated alone.

6. Method according to any of the preceding claims, **characterized in that** the first frequency (f1,$f1_{OPT}$), the second frequency (f2,$f_{OPT}$) and the first time fraction (T1) are chosen among the admitted solutions calculated by solving the following set of equations:

$$PA0 = PA(f1) \, {}^*D + PA(f2) \, {}^*(1-D)$$

$$PB0 = PA(f1) \, {}^*D.$$

7. Method according to claim 6 **characterized in that** the first frequency ($f1_{OPT}$), the second frequency ($f2_{OPT}$) and the first time fraction (T1) chosen among the admitted solutions of the first set of equations, are the one that also optimize one or more criteria selected in the group consisting of:

- power eveness between two following fractions (T1,T2) of control period (T)
- overall efficiency,
- minimum light flickering,
- component stress.

8. Method according to any of the preceding claims, **characterized in that** the first fraction (T1) and the second fraction (T2) of the control period (T) are continuously alternated during the heaters (A,B) time activation.

9. Method according to any of the preceding claims, **characterized in that** the power ($P_A$, $P_B$) delivered to the cooking utensils (C1, C2) is continuously measured during the heater (A,B) activation and the deviation (DE) between the measured value ($PA_0$, $PB_0$) and the correspondent value of the power characteristic curve is calculated, and **in that** when the deviation (DE) is greater than a predetermined threshold error ($T_{HE}$) the method includes thefurthersteps of:

- building a new characteristic curve (PA, PB),
- calculating a new first frequency (f1, $f1_{OPT}$), the new second frequency (f2, $f2_{OPT}$) and a new first time portion (T1, D),
- restarting the heater activation with the new calculated solutions (f1, $f1_{OPT}$, f2, $f2_{OPT}$, T1, D).

10. Method according to claim 9, **characterized in that** the predetermined threshold error ($T_{HE}$) is in the range between 2% and 10% of the relative error.

11. Method according to claim 6,7 **characterized in that** it further includes additional steps of:

- find the best approximation of the required Duty Cycle (<D1>),
- slice the control period (T) according to a time slice ($\Delta t$),
- permute the slice order.

12. Method according to claim 11 **characterized in that** the permutation of the slices includes the steps of creating and sorting a slices-array and to generate a new sequence of slices starting from the sorted slices-array.

**13.** Method according to claim 12 **characterized in that** the new sequence of slices generated starting from the sorted slices-array is created by picking one slice from the top of the sorted slices-array and adding the slice to a new ordered-array containing the new ordinate sequence of slices, and then picking two slices from the bottom of the slices-array and adding the two slices to the ordinate array.

**14.** Method according to claim 11 **characterized in that** $\Delta t$, is synchronized with the power supply network and has duration equal to half period of the power supply network.

**15.** Induction hob (10) having at least two induction heaters (A,B), each induction heater being connected to a converter (HB, QR) for the independent regulation of power levels (PA0, PB0) to be delivered from each heater (A, B) to a superposed cooking utensil (C1,C2), **characterized in that** it comprises a control unit (90) adapted to carry out a method according to any of the preceeding claims.

**Patentansprüche**

**1.** Verfahren zum simultanen Aktivieren von zwei Induktionsheizgeräten (A, B) eines Induktionskochfelds (10) oder dergleichen, wobei jedes Induktionsheizgerät (A, B) mit einem Konverter (HB, QR) verbunden ist zum unabhängigen Regulieren von voreingestellten Leistungspegeln ($PA_0$, $PB_0$), die von jedem Heizgerät (A, B) einem darüber befindlichen Kochutensil (C1, C2) zugeführt werden sollen, wobei die Konverter (HB, QR) während einer vorbestimmten Steuerungsperiode (T) mit einstellbaren periodischen Signalen (S1, S2, $f_{HB}$, $f_{QR}$, $T_{ON}$, $T_{OFF}$) angesteuert werden, wobei das Verfahren die folgenden Schritte umfasst:

- simultanes Aktivieren der Induktionsheizgeräte (A, B) durch Ansteuern ihrer Konverter (HB, QR) mit einstellbaren periodischen Signalen (S1, S2, $f_{HB}$, $f_{QR}$, $T_{ON}$, $T_{OFF}$), die eine identische erste Frequenz (f1, $f1_{OPT}$) aufweisen, während einer ersten Fraktion (T1) der Steuerungsperiode (T),
- Aktivieren nur eines der Induktionsheizgeräte (A, B), die zuvor während des ersten Teils (T1) aktiviert waren, durch Ansteuern seines Konverters (HB, HQ) mit einem Signal (S1, S2, $f_{HB}$, $f_{QR}$, $T_{ON}$, $T_{OFF}$), das eine zweite Frequenz (f2, $f2_{OPT}$) aufweist, über eine zweite Fraktion (T2) der Steuerungsperiode (T), **wobei das andere der zwei Induktionsheizgeräte (A, B) durch Anhalten seines Ansteuersignals (S1, S2) ausgeschaltet wird.**

**2.** Verfahren nach Anspruch 1, **dadurch gekennzeichnet, dass** es auch den Schritt des Aufbauens der Leistungscharakteristikkurven (PA, PB) für jedes Induktionsheizgerät (A, B), das mit seinem zugehörigen darüber befindlichen Kochutensil (C1, C2) gekoppelt ist, einschließt, und dadurch, dass die Leistungscharakteristikkurven (PA, PB) vor der Aktivierung aufgebaut und im Speicher der Steuerungseinheit gespeichert werden.

**3.** Verfahren nach Anspruch 1 und 2, **dadurch gekennzeichnet, dass** die Steuerungsperiode T kleiner ist als die thermische Zeitkonstante (Tau) der darüber befindlichen Kochutensilien (C1, C2), um eine glatte Leistungszufuhr zu den darüber befindlichen Kochutensilien (C1, C2) zu erbringen.

**4.** Verfahren nach einem der vorstehenden Ansprüche, **dadurch gekennzeichnet, dass** sich die erste Frequenz (f1, $f1_{OPT}$) von der zweiten Frequenz (f2, $f2_{OPT}$) unterscheidet.

**5.** Verfahren nach einem der vorstehenden Ansprüche, **dadurch gekennzeichnet, dass** das Induktionsheizgerät (A, B), das während der zweiten Fraktion (T2) ausgeschaltet werden soll, dasjenige unter den zwei Induktionsheizgeräten (A, B) ist, das mit der höchsten Signalfrequenz ($F_{HBPA0}$, $F_{QRPB0}$) angesteuert würde, um den geforderten Leistungspegel ($PA_0$, $PB_0$) zuzuführen, wenn es alleine aktiviert wäre.

**6.** Verfahren nach einem der vorstehenden Ansprüche, **dadurch gekennzeichnet, dass** die erste Frequenz (f1, $f1_{OPT}$), die zweite Frequenz (f2, $f2_{OPT}$) und die erste Zeitfraktion (T1) unter den zulässigen Lösungen ausgewählt werden, die durch Lösen des folgenden Satzes von Gleichungen berechnet werden:

$$PA0 = PA(f1)\,{}^{*}D + PA(f2)\,{}^{*}(1\text{-}D)$$

$$PB0 = PA(f1)\,{}^{*}D.$$

**7.** Verfahren nach Anspruch 6, **dadurch gekennzeichnet, dass** die erste Frequenz ($f1_{OPT}$), die zweite Frequenz ($f2_{OPT}$) und die erste Zeitfraktion (T1), die unter den zulässigen Lösungen des ersten Satzes von Gleichungen ausgewählt werden, diejenige sind, die auch ein oder mehrere Kriterien optimieren, ausgewählt aus der Gruppe bestehend aus:

- Leistungsgleichmäßigkeit zwischen zwei aufeinanderfolgenden Fraktionen (T1, T2) der Steuerungsperiode (T),
- Gesamteffizienz,
- minimales Lichtflackern,

- Komponentenbelastung.

8. Verfahren nach einem der vorstehenden Ansprüche, **dadurch gekennzeichnet, dass** die erste Fraktion (T1) und die zweite Fraktion (T2) der Steuerungsperiode (T) während der Aktivierungszeit der Heizgeräte (A, B) kontinuierlich abgewechselt werden.

9. Verfahren nach einem der vorstehenden Ansprüche, **dadurch gekennzeichnet, dass** die den Kochutensilien (C1, C2) zugeführte Leistung ($P_A$, $P_B$) während der Aktivierung der Heizgeräte (A, B) kontinuierlich gemessen und die Abweichung (DE) zwischen dem gemessenen Wert ($PA_0$, $PB_0$) und dem entsprechenden Wert der Leistungscharakteristikkurve berechnet wird, und dadurch, dass wenn die Abweichung (DE) größer ist als ein vorbestimmter Grenzfehler ($T_{HE}$), das Verfahren die folgenden weiteren Schritte einschließt:

- Aufbauen einer neuen Charakteristikkurve (PA, PB),
- Berechnen einer neuen ersten Frequenz (f1, $f1_{OPT}$), der neuen zweiten Frequenz (f2, $f2_{OPT}$) und eines neuen ersten Zeitteils (T1, D),
- erneutes Starten der Heizgerätaktivierung mit den neu berechneten Lösungen (f1, $f1_{OPT}$, f2, $f2_{OPT}$, T1, D).

10. Verfahren nach Anspruch 9, **dadurch gekennzeichnet, dass** der vorbestimmte Grenzfehler ($T_{HE}$) im Bereich zwischen 2 % und 10 % des relativen Fehlers liegt.

11. Verfahren nach Anspruch 6, 7, **dadurch gekennzeichnet, dass** es weiter die folgenden zusätzlichen Schritte einschließt:

- Finden der besten Approximation des geforderten Tastgrades (<D1>),
- Aufteilen der Steuerungsperiode (T) gemäß einem Zeitanteil (Δt),
- Permutieren der Anteilsreihenfolge.

12. Verfahren nach Anspruch 11, **dadurch gekennzeichnet, dass** die Permutation der Anteile die Schritte des Erzeugens und Sortierens eines Anteilsarrays und Generierens einer neuen Sequenz von Anteilen ausgehend von dem sortierten Anteilsarray einschließt.

13. Verfahren nach Anspruch 12, **dadurch gekennzeichnet, dass** die neue Sequenz von Anteilen, die ausgehend von dem sortierten Anteilsarray generiert wird, durch Auswählen eines Anteils vom oberen Ende des sortierten Anteilsarrays und Hinzufügen des Anteils zu einem neu geordneten Array, das die neue Ordinatensequenz von Anteilen enthält, und dann Auswählen von zwei Anteilen vom unteren Ende des Anteilsarrays und Hinzufügen der zwei Anteile zum Ordinatenarray erzeugt wird.

14. Verfahren nach Anspruch 11, **dadurch gekennzeichnet, dass** Δt mit dem Energieversorgungsnetzwerk synchronisiert ist und eine Dauer aufweist, die gleich der halben Periode des Energieversorgungsnetzwerkes ist.

15. Induktionskochfeld (10), das mindestens zwei Induktionsheizgeräte (A, B) aufweist, wobei jedes Induktionsheizgerät mit einem Konverter (HB, QR) verbunden ist zum unabhängigen Regulieren der Leistungspegel (PA0, PB0), die von jedem Heizgerät (A, B) einem darüber befindlichen Kochutensil (C1, C2) zugeführt werden sollen, **dadurch gekennzeichnet, dass** es eine Steuerungseinheit (90) umfasst, die dazu geeignet ist, ein Verfahren nach einem der vorstehenden Ansprüche auszuführen.

## Revendications

1. Procédé d'activation simultanée de deux dispositifs de chauffage à induction (A, B) d'une plaque de cuisson à induction (10) ou équivalent, chaque dispositif de chauffage à induction (A, B) étant relié à un convertisseur (HB, QR) pour la régulation indépendante de niveaux de puissance préréglés ($PA_0$, $PB_0$) devant être délivrés par chaque dispositif de chauffage (A, B) à un ustensile de cuisine superposé (C1, C2), les convertisseurs (HB, QR) étant commandés avec des signaux périodiques réglables (S1, S2, $f_{HB}$, $f_{QR}$, $T_{ON}$, $T_{OFF}$) au cours d'une période de commande prédéterminée (T), le procédé comportant les étapes de :

- activation simultanée des dispositifs de chauffage à induction (A, B) en commandant leurs convertisseurs (HB, QR) avec des signaux périodiques réglables (S1, S2, $f_{HB}$, $f_{QR}$, $T_{ON}$, $T_{OFF}$) présentant une première fréquence identique (f1, $f1_{OPT}$) pendant une première fraction (T1) de la période de commande (T),
- activation seulement d'un des dispositifs de chauffage à induction (A, B) précédemment activé pendant la première partie (T1) en commandant son convertisseur (HB, HQ) avec un signal (S1, S2, $f_{HB}$, $f_{QR}$, $T_{ON}$, $T_{OFF}$) présentant une deuxième fréquence (f2, $f2_{OPT}$) pour une deuxième fraction (T2) de la période de commande (T), **l'autre des deux dispositifs de chauffage à induction (A, B) étant éteint interrompant son signal de commande (S1, S2).**

2. Procédé selon la revendication 1, **caractérisé en ce**

**qu**'il inclut également l'étape de construction des courbes caractéristiques de puissance (PA, PB), pour chaque dispositif de chauffage à induction (A, B) couplé à son ustensile de cuisine superposé associé (C1, C2) et en ce que les courbes caractéristiques de puissance (PA, PB) sont construites et stockées dans la mémoire d'unité de commande avant l'activation.

**3.** Procédé selon la revendication 1 et 2, **caractérisé en ce que** la période de commande T est inférieure à la constante de temps thermique (Tau) des ustensiles de cuisine superposés (C1, C2), afin de fournir une alimentation en douceur aux ustensiles de cuisine superposés (C1, C2).

**4.** Procédé selon l'une quelconque des revendications précédentes, **caractérisé en ce que** la première fréquence (f1, $f1_{OPT}$) est différente de la deuxième fréquence (f2, $f2_{OPT}$).

**5.** Procédé selon l'une quelconque des revendications précédentes, **caractérisé en ce que** le dispositif de chauffage à induction (A, B) devant être arrêté pendant la deuxième fraction (T2) est celui, parmi les deux dispositifs de chauffage à induction (A, B), qui serait commandé à la fréquence de signal la plus élevée ($f_{HBPA0}$, $f_{QRPB0}$) pour délivrer le niveau de puissance demandé ($PA_0$, $PB_0$), lorsqu'il est seul activé.

**6.** Procédé selon l'une quelconque des revendications précédentes, **caractérisé en ce que** la première fréquence (f1, $f1_{OPT}$), la deuxième fréquence (f2, $f2_{OPT}$) et la première fraction de temps (T1) sont choisies parmi les solutions admises calculées en résolvant l'ensemble suivant d'équations :

$$PA0 = PA(f1)*D + PA(f2)*(1-D)$$

$$PB0 = PA(f1)*D.$$

**7.** Procédé selon la revendication 6, **caractérisé en ce que** la première fréquence ($f1_{OPT}$), la deuxième fréquence ($f2_{OPT}$) et la première fraction de temps (T1) choisies parmi les solutions admises du premier ensemble d'équations, sont celles qui optimisent également un ou plusieurs critères choisis dans le groupe consistant en :

- régularité de puissance entre deux fractions suivantes (T1, T2) de la période de commande (T),
- rendement global,
- clignotement minimum,
- contrainte de composant.

**8.** Procédé selon l'une quelconque des revendications précédentes, **caractérisé en ce que** la première fraction (T1) et la deuxième fraction (T2) de la période de commande (T) sont alternées de manière continue pendant l'activation temporelle des dispositifs de chauffage (A, B).

**9.** Procédé selon l'une quelconque des revendications précédentes, caract**érisé en ce que** la puissance ($P_A$, $P_B$) délivrée aux ustensiles de cuisine (C1, C2) est mesurée en continu pendant l'activation de dispositif de chauffage (A, B) et l'écart (DE) entre la valeur mesurée ($PA_0$, $PB_0$) et la valeur correspondante de la courbe caractéristique de puissance est calculé, et en ce que, quand l'écart (DE) est supérieur à une erreur de seuil prédéterminée ($T_{HE}$), le procédé inclut les étapes supplémentaires de :

- construction d'une nouvelle courbe caractéristique (PA, PB),
- calcul d'une nouvelle première fréquence (f1, $f1_{OPT}$), de la nouvelle deuxième fréquence (f2, $f2_{OPT}$) et d'une nouvelle première partie de temps (T1, D),
- redémarrage de l'activation de dispositif de chauffage avec les nouvelles solutions calculées (f1, $f1_{OPT}$, f2, $f2_{OPT}$, T1, D).

**10.** Procédé selon la revendication 9, **caractérisé en ce que** l'erreur de seuil prédéterminée ($T_{HE}$) est dans la plage entre 2 % et 10 % de l'erreur relative.

**11.** Procédé selon la revendication 6, 7, **caractérisé en ce qu**'il inclut en outre des étapes additionnelles consistant à :

- trouver la meilleure approximation du coefficient d'utilisation requis (<D1>),
- découper la période de commande (T) selon une tranche de temps ($\Delta$t),
- permuter l'ordre de tranche.

**12.** Procédé selon la revendication 11, **caractérisé en ce que** la permutation des tranches inclut les étapes de création et de tri d'une matrice de tranches et la génération d'une nouvelle séquence de tranches à partir de la matrice de tranches triée.

**13.** Procédé selon la revendication 12, **caractérisé en ce que** la nouvelle séquence des tranches générée à partir de la matrice de tranches triée est créée en prélevant une tranche sur le dessus de la matrice de tranches triée et en ajoutant la tranche à une nouvelle matrice ordonnée contenant la nouvelle séquence ordonnée de tranches, et en prélevant ensuite deux tranches par le dessous de la matrice de tranches et en ajoutant les deux tranches à la matrice ordonnée.

**14.** Procédé selon la revendication 11, **caractérisé en ce que** Δt est synchronisée avec le réseau d'alimentation en énergie et présente une durée égale à la demi-période du réseau d'alimentation en énergie.

**15.** Plaque de cuisson à induction (10) présentant au moins deux dispositifs de chauffage à induction (A, B), chaque dispositif de chauffage à induction étant relié à un convertisseur (HB, QR) pour la régulation indépendante de niveaux de puissance (PA0, PB0) devant être délivrés par chaque dispositif de chauffage (A, B) à un ustensile de cuisine superposé (C1, C2), **caractérisée en ce qu'**elle comporte une unité de commande (90) prévue pour mettre en œuvre un procédé selon l'une quelconque des revendications précédentes.

Fig. 1

Fig. 2

Half Bridge topology

Fig. 3

Quasi-resonant single-ended topology

Fig. 4

Fig. 5

$$P_{AO} = P_A(f_1) * D_1 + P_A(f_2) * D_2$$

$$P_{BO} = P_A(f_1) * D_1$$

$$D_1 = T_1/T$$

$$D_2 = T_2/T$$

Fig. 6

Fig. 6A

Fig. 7

Fig. 8

Fig. 9

Fig. 10

## Fig. 11/1

```
                    ┌─────────────┐
                    │    START    │
                    └──────┬──────┘
                           │
             ┌─────────────▼─────────────┐
             │ User Select or changes power│
             │ request (Pa0, Pb0)          │
             └─────────────┬─────────────┘
                           │
   ┌───────────────────────▼───────────────────────┐
   │ Acquire Power Curve                            │
   │        ┌──────────────────────┐                │
   │        │ f_test <- f_max       │                │
   │        └──────────┬───────────┘                │
   │                   │                            │
   │        ┌──────────▼───────────┐                │
   │        │ f_test <- f_test - Δf  │◄──────┐       │
   │        └──────────┬───────────┘        │       │
   │                   │                    │       │
   │        ┌──────────▼───────────┐        │       │
   │        │ acquire P(f_test)     │        │       │
   │        └──────────┬───────────┘        │       │
   │                   │                    │       │
   │        ┌──────────▼───────────┐        │       │
   │        │ store Pa(f_test)      │        │       │
   │        │ store Pb(f_test)      │        │       │
   │        └──────────┬───────────┘        │       │
   │                   │                    │       │
   │             ◇─────▼─────◇     N        │       │
   │            ╱ f_test <= f_min ╲─────────┘       │
   │            ╲  or              ╱                │
   │             ╲ P(f_test) > Pmax╱                │
   │              ◇─────┬─────◇                     │
   │                    │ Y                         │
   └────────────────────┼───────────────────────────┘
                        │
          ┌─────────────▼─────────────┐
          │ find fa0 and fb0, i.e. the  │
          │ frequencies at which        │
          │ Pa(fa0)=Pa0 and Pb(fb0)=Pb0 │
          └─────────────┬─────────────┘
                        │
          Y      ◇──────▼──────◇      N
       ┌────────╱    fa0 <=      ╲────────┐
       │        ╲    fb0          ╱       │
       │         ◇──────────────◇        │
┌──────▼──────────────┐       ┌───────────▼─────────┐
│ Burner A operates in │       │ Burner B operates in │
│ both phases Burner B │       │ both phases Burner A │
│ operates in          │       │ operates in          │
└──────┬──────────────┘       └───────────┬─────────┘
       │        ┌──────────────────────┐  │
       └───────►│ Identify the frequency│◄─┘
                │ range where the eq.    │
                │ System admits at least │
                │ a solution, i.e.       │
                │ Px(f) > Px0            │
                └──────────┬────────────┘
                           │
             ┌─────────────▼─────────────┐
             │ set one parameter to be    │
             │ fixed and swept among the  │
             │ f1, f2 and D1              │
             └─────────────┬─────────────┘
                           │
                         ( A )
```

$$Pa0 = Pa(f1)*D1 + Pa(f2)*(1-D1)$$
$$Pb0 = Pb(f1)*D1$$

This may require interpolation

This will reduce the numer of degrees of freedom from 1 to 0

**Fig. 11/2**

Fig. 12

**EP 1 951 003 B2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 05043737 A2
- EP 0286044 A

- US 4871961 A